# EUROPÄISCHE PATENTSCHRIFT

(11) **EP 2 815 716 B1**
(45) Veröffentlichungstag und Bekanntmachung des Hinweises auf die Patenterteilung: **02.10.2019**
(21) Anmeldenummer: 13172937.8
(22) Anmeldetag: 20.06.2013
(51) Int. Cl.: A61C 5/20, A61C 5/30

(54) **Zahnverblendungselement und Verfahren zu dessen Herstellung**
Dental veneer element and method for producing the same
Elément de facette dentaire et procédé destiné à sa fabrication

(43) Veröffentlichungstag der Anmeldung: 24.12.2014
(73) Patentinhaber: Coltène/Whaledent AG, 9450 Altstaetten (CH)
(72) Erfinder: Böhner, Ralf, 9451 Kriessern (AT); Schlüter, Martin, 88239 Wangen (DE)
(74) Vertreter: Hepp Wenger Ryffel AG

(56) Entgegenhaltungen:
- DE-A1- 10 234 994
- US-A- 5 332 390
- US-A1- 2008 081 318

## Beschreibung

Die Erfindung betrifft ein Zahnverblendungselement und ein Verfahren zur Herstellung eines Zahnverblendungselements gemäß den unabhängigen Ansprüchen. Offenbart sind ferner eine Form und eine Verwendung einer Form zur Herstellung eines Zahnverblendungselements.

Zahnverblendungselemente, so genannte Veneers, sind dünne Schalen in Zahnform und Zahnfarbe, die auf natürliche Zähne aufgebracht werden, um Mängel einer darunter liegenden Zahnstruktur zu kaschieren. Derartige Verblendschalen werden in der Regel für die gut sichtbaren Frontzähne zur ästhetischen Frontzahnkorrektur angewendet.

Hierzu können zum Beispiel vollkeramische Verblendschalen zur Anwendung kommen. Diese werden individuell in einem Labor gemäss Abformungen eines zum Beispiel abgeschliffenen Zahnes oder Zahnstumpfes angefertigt. Die Keramikschalen werden dabei individuell auf die natürlichen Zähne des Patienten abgestimmt. Die so gefertigten Verblendschalen werden vom Zahnarzt am Zahn beziehungsweise Zahnstupf angebracht. Derartige Keramikschalen haben den Nachteil, dass ohne zusätzlichen Aufwand eine Anpassung an die konkrete Situation des Patienten vor Ort nicht möglich ist. Damit sind in der Regel wenigstens zwei Zahnarztbesuche (zur Abformung und Applikation) erforderlich und die Anfertigung der individuellen Keramikschalen ist kostenintensiv.

Eine kostengünstigere Alternative sind direkt vom Zahnarzt hergestellte Zahnverblendungen, so genannte "chairside veneers". Diese werden zum Beispiel aus bekannten Füllwerkstoffen wie beispielsweise Kompositmaterialien in einer Schichttechnik zum Beispiel direkt am Zahn beziehungsweise am Zahnstumpf aufgebaut. Dabei bestehen allerdings beträchtliche Anforderungen hinsichtlich des Farb- und Formgefühls des Zahnarztes, da dieser an Stelle des Zahntechnikers im Labor vor Ort eine natürliche und ästhetisch ansprechende Form schaffen muss. Alternativ können auch Keramikschalen in einem CEREC-Verfahren vom Zahnarzt angefertigt werden. Dies verlangt aber eine entsprechend aufwändige Ausrüstung der Zahnarztpraxis (z.B. CAD/CAM-Technologie).

Als besonders erfolgreich und kostengünstig haben sich vorgefertigte Verblendschalen aus Kompositmaterialien erwiesen, so genannte direkten Veneers ("direct veneers"). Derartige Verblendschalen werden üblicherweise in einer Auswahl an Formen und Farben bereitgestellt, aus welchen der Zahnarzt aufgrund der individuellen Vorgaben der Zahnsituation des Patienten auswählen kann. Die vorgefertigten Verblendschalen können mit einem Haftstoff, einem so genannten "Bond" oder "Bonding", wie z.B. einem pastösen Kompositmaterial auf den Zahn bzw. Zahnstumpf aufgebracht werden. In der Regel kommen dabei licht- oder wärmepolymerisierbare Kompositmaterialien zur Anwendung, welche chemisch analog oder identisch zu bereits bekannten Füllmaterialien und/oder dem Material der Verblendschalen aufgebaut sind. Nach dem Aufbringen kann der Zahnarzt die Verblendschalen durch Schleifen und Polieren nachbearbeiten oder mit einem pastösen oder fliessfähigen Kompositmaterial ergänzen, um gesamthaft ein individuelles und ästhetisch hochwertiges Ergebnis zu erreichen. Zum Stand der Technik sei beispielsweise auf DE 102 34 994, US 2008/081318 und US 5 332 390 verwiesen. DE 102 34 994 schlägt eine Vorrichtung zur Aufbringung eines vorgeformten Verblendungselements auf einen Zahn vor. Ein solches Verblendungselement besitzt zumindest eine Schicht aus einer plastisch noch verformbaren, aushärtbaren Dentalmasse.

Aus US 2008/0081318 sind vorgefertigte Zahnvorrichtungen mit vorgeformten Zahnoberflächen bekannt, die eine Vielzahl von zumindest teilweise nicht ausgehärteten Verbundschichten oder - bereichen besitzen. Mindestens eine der Verbundschichten grenzt an die Zahnoberfläche. Die anderen Verbundschichten sind relativ zueinander angeordnet. So ergibt sich für die jeweilige Zahnvorrichtung die gewünschte Farbschattierung. Die US 5 332 390 beschreibt ein System zur Herstellung einer Zahnkrone, oder eines künstlichen Zahns. Das offenbarte Verblendungselement besteht aus einer transparenten Schale, welche mit einem polymerisierbaren oder licht-aushärtenden Harz gefüllt ist. Die mit Harz gefüllte Schale wird auf den bereits vorbereiteten Zahnstupf gesetzt und das polymerisierbare Harz mit Hilfe von Licht ausgehärtet. Schale und Harz sind chemisch kompatibel, so dass sie während des Aushärtungsvorganges eine chemische Bindung miteinander eingehen.

An die Verbindung zwischen Zahnverblendungselement und ursprünglichem Zahn werden erhöhte Anforderungen gestellt, da das Zahnverblendungselement auch beim Abbeissen harter Nahrungsmittel, also unter dem Auftreten hoher Scherkräfte über lange Zeit auf dem Zahn verbleiben soll. Während mit bestehenden Lösungen bereits gute Ergebnisse erreicht werden können, besteht generell das Bedürfnis, die Haftung der Veneers am Zahn weiter zu verbessern und so z.B. die Lebensdauer der Restauration zu verlängern.

Es ist daher die Aufgabe der Erfindung, die Nachteile des Standes der Technik zu vermeiden. Insbesondere ist es eine Aufgabe der Erfindung, ein kostengünstiges Zahnverblendungselement zu schaffen, welches sicher, dauerhaft und einfach auf einem Zahn befestigbar ist.

Diese Aufgaben werden durch die kennzeichnenden Merkmale der unabhängigen Ansprüche gelöst.

Zur Lösung der oben angegebenen Aufgabe führt insbesondere ein Zahnverblendungselement zum Verblenden einer Zahnoberfläche, umfassend ein Kompositmaterial mit zumindest teilweise umgesetzten polymerisierbaren Gruppen, wobei das Zahnverblendungselement eine Aussenseite und eine Innenseite aufweist. Dabei ist die Innenseite des Zahnverblendungselements zur Befestigung an einem Zahn vorgesehen, insbesondere auch entsprechend ausgebildet. Die Erfindung zeichnet sich dadurch aus, dass ein Anteil noch nicht umgesetzter polymerisierbarer Gruppen des Kompositmaterials an der Innenseite grösser ist, als an der Aussenseite des Zahnverblendungselements.

Derartige Zahnverblendungselemente kommen bevorzugt bei der Verblendung äusserer, fazialer Zahnoberflächen zum Einsatz. Dabei ist allerdings nicht ausgeschlossen, dass sich das Zahnverblendungselement auch z.B. auf eine Schneidkante, eine Kauffläche oder Bereiche zwischen den Zähnen erstreckt.

Das erfindungsgemässe Zahnverblendungselement verbessert die Bindung zwischen Haftstoff und Zahnverblendungselement, so dass das Zahnverblendungselement sicher auf dem Zahn fixiert bleibt. Dies wird durch an der Innenseite vorhandene, noch nicht umgesetzte polymerisierbare Gruppen erreicht, die mit dem Kompositmaterial, das zum Aufbringen der Veneers verwendet wird, beim endgültigen Härten am Zahn eine kovalente chemische Bindung eingehen können.

Dabei ist das Kompositmaterial des Zahnverblendungselements vorzugsweise derart ausgehärtet, d.h. ein Anteil von umgesetzten polymerisierbaren Gruppen ist derart hoch, dass das Zahnverblendungselement einen im Wesentlichen festen Körper bildet. Dies hat den Vorteil, dass das Zahnverblendungselement analog vollständig gehärteter Zahnverblendungselemente z.B. verarbeitet oder appliziert werden kann, wobei dennoch eine verbesserte Anhaftung des Haftstoffs an der Innenseite gewährleistet werden kann.

Der Anteil von noch nicht umgesetzten polymerisierbaren Gruppen nimmt von der Aussenseite zur Innenseite wenigstens in einer Grenzschicht an der Innenseite kontinuierlich zu. Im übrigen Bereich kann der Anteil noch nicht umgesetzter polymerisierbarer Gruppen zwischen Aussenseite und Innenseite weitgehend konstant sein. In Varianten kann selbstverständlich auch eine kontinuierliche Zunahme über den gesamten Bereich von der Aussenseite zur Innenseite hin erfolgen.

Auf diese Weise wird der Anteil noch nicht umgesetzter polymerisierbarer Gruppen von der Aussenseite zur Innenseite gezielt und den Erfordernissen angepasst variiert. Insbesondere kann das Zahnverblendungselement gezielt nur in dem Bereich einen erhöhten Anteil noch nicht umgesetzter polymerisierbarer Gruppen aufweisen, in welchem der Haftstoff am Zahnverblendungselement in Kontakt kommt, nämlich direkt an der zur Befestigung vorgesehenen Innenseite.

Die Dicke des Zahnverblendungselements kann im Bereich von 0.2 mm bis 1.6 mm, insbesondere im Bereich von 0.3 mm bis 1.2 mm, liegen. Als Dicke des Zahnverblendungselements wird hier die Schichtdicke des Zahnverblendungselements bezeichnet, ohne den Haftstoff, welcher zusätzlich aufgebracht wird. Mit anderen Worten bezieht sich die Dicke auf das Zahnverblendungselement im Lieferzustand. Das Zahnverblendungselement mit einer derartigen Dicke ermöglicht ein ästhetisch optimales Ergebnis bei gleichzeitig ausreichender Festigkeit des Zahnverblendungselements.

Geeignete Kompositmaterialien umfassen eine organische Kunststoffmatrix (organische Phase), insbesondere mit zur Polymerisierung vorgesehenen Monomeren, die mit einem anorganischen, insbesondere festen, Füllstoff versetzt ist (anorganische Phase). Als Kunststoffmatrix kommen bevorzugt Polymere auf Basis wenigstens eines der Monomere, die in Handbook of Pressure Sensitive Adhesive Teclmology, 2nd edition, Donatas Satas, 1989, Van Nostrand Reinhold, 0 442 28026 2, Seite 444 bis 450 beschrieben sind. Mit Vorteil umfasst das Kompositmaterial dabei wenigstens eine Acrylatbasis, insbesondere eine Methacrylatbasis. Kompositmaterialien auf Acrylatbasis, insbesondere auf Methacrylatbasis, haben sich in der Praxis bewährt und sind vielfältig verfügbar. Die polymerisierbaren Gruppen sind einfach und zuverlässig umsetzbar und erreichen in Verbindung mit dem entsprechenden Haftstoff eine gute Haltbarkeit auf dem Zahn. Die erfindungsgemäss an der Innenseite vorhandenen, noch nicht umgesetzte polymerisierbare Gruppen sind hochreaktiv und können beim endgültigen Härten am Zahn zuverlässig eine kovalente chemische Bindung mit dem Haftstoff eingehen, welcher bevorzugt auf demselben Kompositmaterial basiert.

Ausgewählte geeignete polymerisierbare mono- oder multifunktionelle Monomere der organischen Phase sind Mono(meth)acrylate, wie Methyl-, Ethyl-, Butyl-, Benzyl-, Furfuryl- oder Phenyl(meth)acrylat, mehrfunktionelle Acrylate und Methacrylate wie zum Beispiel Bisphenol-(A)-di(meth)acrylat, Bisphenol-A-Glycidylmethacrylat (bekannt als "Bis GMA", welches ein Additionsprodukt aus Methacrylsäure und Bisphenol-A-diglycidylether ist), UDMA (ein Additionsprodukt aus 2-Hydroxyethylmethacrylat und 2,2,4-Hexamethylendiisocyanat), Di- , Tri- und Tetraethylenglykoldi(meth)acrylat (wie z.B. TEGDMA), Decandioldi(meth)acrylat, Trimethylolpropantri(meth)acrylat, Pentaerythrittetra(meth)acrylat und Butandioldi(meth)acrylat, 1,10-Decandioldi(meth)acrylat oder 1,12-Dodecandioldi(meth)acrylat. Ebenso sind organische Phasen umfassend methacrylatmodifizierte Polysiloxane bekannt.

Die Aushärtung des Kompositmaterials erfolgt aufgrund von geeigneten Initiatoren und ggf. weiterer polymerisationsfähiger Komponenten z.B. durch thermische (thermische Härtung), photochemische (Lichthärtung) oder redoxinduzierte Polymerisation (chemische Härtung). Dabei können bei Vorhandensein unterschiedlicher polymerisationsfähiger Gruppen, z. B. von (Meth)acryl- und Epoxidgruppen, auch mehrere Härtungsmechanismen, z. B. radikalische und kationische Polymerisation, gleichzeitig oder in aufeinander folgenden Stufen zur Anwendung kommen.

Bevorzugte Initiatoren für die thermische Härtung sind Peroxide, wie beispielsweise Dibenzoylperoxid, Dilaurylperoxid, tert.-Butylperoctoat und tert.-Butylperbenzoat sowie Azobisisobutyroethylester, Benzpinakol und 2,2-Dimethylbenzpinakol.
Bevorzugte Photoinitiatoren sind Benzophenon und Benzoin sowie deren Derivate, α-Diketone und deren Derivate, wie beispielsweise 9,10-Phenanthrenchinon, Diacetyl und 4,4-Dichlorbenzil. Weitere bevorzugte Photoinitiatoren sind 2,2-Methoxy-2-phenyl-acetophenon und insbesondere Kombinationen von α-Diketonen mit Aminen als Reduktionsmittel, wie zum Beispiel N-Cyanoethyl-N-methylanilin, 4-(N,N-Dimethylamino)-benzoesäureester, N,N-Dimethylaminoethylmethacrylat, N,N-Dimethyl-sym.-xylidin oder Triethanolamin. Darüber hinaus sind Acylphosphine, wie zum Beispiel 2,4,6-Trimethylbenzoyldiphenyl oder Bis-(2,6-dichlorbenzoyl)-4-N-propylphenylphosphinoxid, als Photoinitiatoren geeignet. Besonders bevorzugte Photoinitiatoren sind Campherchinon, welches Licht mit einer Wellenlänge von 440 bis 480 nm absorbiert und dadurch aktivierbar ist, bzw. Phenyl-Propandiol, das durch Licht mit einer Wellenlänge von 300 bis 450 nm aktivierbar ist.

Für eine duale Aushärtung von radikalisch und kationisch polymerisierbaren Systemen eignen sich besonders Diaryliodonium oder Triarylsulfoniumsalze, wie zum Beispiel Triphenylsulfoniumhexafluorophosphat und -hexafluoroantimonat.

Als Initiatoren für eine redoxinduzierte Polymerisation (chemische Härtung) bei Raumtemperatur oder Tieftemperaturen werden Redox-Initiatorkombinationen, wie zum Beispiel Kombinationen von Benzoyl- oder Laurylperoxid mit N,N-Dimethyl-sym.-xylidin oder N,N-Dimethyl-p-toluidin, verwendet. In der Regel kommen dabei 2-Komponenten-Systeme zum Einsatz, bei welchen aufgrund einer Vermischung der beiden Komponenten der Initiator aktivierbar ist und die Polymerisation auslöst.

Das Kompositmaterial kann dabei weitere Bestandteile aufweisen wie z.B. Mono-, Di- und Triacrylate als Comonomere oder z.B. Toluidin als Beschleuniger der Photopolymerisation. Weitere Zusätze können beispielsweise Polymerisationsinhibitoren zur Vermeidung einer vorzeitigen Polymerisation wie z.B. Hydrochinon als Inhibitor einer Photopolymerisation umfassen. Weiter können weitere Additive wie Benzophenon als UV-Stabilisator, Oxidationsinhibitoren, Verlaufsmittel, Färbemittel (Pigmente und Farbstoffe), Stabilisatoren, Aromastoffe, mikrobiozide Wirkstoffe und/oder Weichmacher vorhanden sein.

Als anorganischer Füllstoff umfasst das Kompositmaterial bevorzugt wenigstens ein Glas, insbesondere ein Bariumglas und/oder ein Strontiumglas.

Weitere bevorzugte anorganische Füllstoffe sind amorphe, z.B. granulöse, beispielsweise weitgehend kugelförmige, Materialien beispielsweise auf der Basis von Mischoxiden aus SiO₂, ZrO₂ und/oder TiO₂; pyrogene Kieselsäure oder Fällungskieselsäure sowie sonstige Füllstoffe mit durchschnittlichen Partikelgrössen im Bereich von 0.5 bis etwa 5 µm, insbesondere Quarz (Silikate, Sande), Glaskeramiken (z.B. Barium-Aluminium-Glas) oder Glaspulver sowie röntgenopake Füllstoffe, wie Ytterbiumtrifluorid. Ebenso kann der Füllstoff auch so genannte Mikrofüller-Komplexe wie z.B. Hybrid-Komposite und Nanopartikel (Nano-Hybridkomposite) umfassen. Darüber hinaus können grundsätzlich auch Glasfasern, Polyamide oder Kohlenstofffasern als Füllstoffe eingesetzt werden. Die Oberfläche des Füllstoffs ist in der Regel silanisiert, um eine Verbindung mit der organischen Matrix zu ermöglichen.

Das Kompositmaterial wird lichthärtend und/oder thermisch härtend ausgebildet.

Die Lichthärtung hat den Vorteil, dass beim Härten über die Eindringtiefe des Lichts in das Kompositmaterial und die Dauer der Belichtung der Umsatz der polymerisierbaren Gruppen im Zahnverblendungselement gesteuert werden kann. Insbesondere kann der Umsatz beim Härten derart eingestellt werden, dass ein Anteil noch nicht umgesetzter polymerisierbarer Gruppen an der Innenseite grösser ist, als an der Aussenseite. Ausserdem kann somit auch ein lichthärtendes Kompositmaterial als Haftstoff bei der Applikation des Zahnverblendungselements zur Anwendung kommen. Die Härtung im Mund des Patienten kann somit schmerzfrei und ohne Nebenwirkung erfolgen, wobei noch nicht umgesetzte polymerisierbare Gruppen des Haftstoff und der Innenseite des Zahnverblendungselements aneinander binden.

Das Kompositmaterial kann auch thermisch härtend ausgebildet sein. Dabei kann das Kompositmaterial auch gleichzeitig lichthärtend und thermisch härtend ausgebildet sein. Auf diese Weise können je nach Erfordernis unterschiedliche Herstellungsverfahren zur Anwendung kommen, um das erfindungsgemässe Zahnverblendungselement zu erzeugen.

Bevorzugt liegt der Anteil noch nicht umgesetzter polymerisierbarer Gruppen an der Innenseite in einem Bereich von 10% bis 80%, insbesondere 25% bis 70% liegt. Es hat sich gezeigt, dass mit Werten in diesem Bereich der Haftstoff eine gute chemische Bindung mit dem Kompositmaterial an der Innenseite des Zahnverblendungselements eingehen kann.

An der Aussenseite liegt der Anteil noch nicht umgesetzter polymerisierbarer Gruppen bevorzugt in einem Bereich von 1% bis 50%, insbesondere im Bereich von 5% bis 35%. Je nachdem, welches Kompositmaterial zur Anwendung kommt, können aufgrund chemischer und technischer Grenzen nicht alle polymerisierbaren Gruppen umgesetzt werden. Auch bei weitgehend "vollständiger" Härtung verbleibt somit immer ein Rest nicht umgesetzter Gruppen im Kompositmaterial. Vorzugsweise ist das Zahnverblendungselement an der Aussenseite in diesem Sinne weitgehend vollständig ausgehärtet.

Zur Lösung der Aufgabe führt weiterhin eine Form zur Herstellung eines Zahnverblendungselements wie vorliegend beschrieben, welche Form einen Hohlraum zur Formung des Zahnverblendungselements umfasst. Die Form ist in einem ersten Bereich, welcher zur zumindest teilweisen Formung der Aussenseite des Zahnverblendungselements vorgesehen ist lichtdurchlässig ausgebildet. Zudem oder stattdessen weist die Form in dem ersten Bereich eine höhere Wärmeleitfähigkeit auf, als in einem zweiten Bereich, welcher zur Formung der Innenseite vorgesehen ist.

Bevorzugt ist die Form im ersten Bereich in einem Wellenlängenbereich lichtdurchlässig, welcher typischerweise zur Härtung von lichthärtenden Kompositmaterialien zur Anwendung kommt. Insbesondere ist die Form im ersten Bereich im Wellenlängenbereich von 300 nm - 500 nm lichtdurchlässig. Die Form kann hierzu z.B. im ersten Bereich ein entsprechendes Fenster aufweisen oder es kann ein den ersten Bereich aufweisender Formenteil gesamthaft lichtdurchlässig ausgebildet sein. Bevorzugt ist die Form im zweiten Bereich lichtundurchlässig bzw. weist eine geringere Lichtdurchlässigkeit auf, als im ersten Bereich.

Die hier genannte Wärmeleitfähigkeit im ersten Bereich bezieht sich jeweils auf eine Wärmeleitfähigkeit in Richtung zu einer den Hohlraum zur Formung des Zahnverblendungselements begrenzenden Oberfläche der Form. Mit anderen Worten kann bei entsprechender Wärmebeaufschlagung im ersten Bereich Wärmeenergie schneller in ein im Hohlraum vorhandenes Kompositmaterial eingebracht werden, als im zweiten Bereich. Insbesondere bezeichnet eine höhere Wärmeleitfähigkeit, dass der Wärmeleitfähigkeitskoeffizient im ersten Bereich einen höheren Wert aufweist, als der Wärmeleitfähigkeitskoeffizient im zweiten Bereich. Somit kann, z.B. auch bei gleichförmiger Heizung der Form von aussen her, während der Herstellung mehr Wärmeenergie über den ersten Bereich, d.h. an der Aussenseite des Zahnverblendungselements, Wärmeenergie schneller in das Kompositmaterial eingebracht werden, als über den zweiten Bereich, d.h. an der Innenseite. Der erste Bereich der Form kann hierzu z.B. eine Beschichtung mit einem Material mit hohem Wärmeleitfähigkeitskoeffizient aufweisen und/oder der zweite Bereich eine Beschichtung mit einem geringen Wärmeleitfähigkeitskoeffizient.

Eine derartige Form ermöglicht das einfache Herstellen eines Zahnverblendungselements mit unterschiedlichen Anteilen von umgesetzten polymerisierbaren Gruppen an der Aussenseite und der Innenseite.

Die Form kann dabei ein Metall und/oder einen Kunststoff umfassen. Als Metalle können dabei Reinmetalle oder Legierungen wie z.B. Stahl, Messing, Bronze, Kupfer oder Zink zum Einsatz kommen. Als Stahl kommt bevorzugt ein Kohlenstoffstahl, Nickelstahl ("Ferronickel"), Invarstahl, Chromnickelstahl, Manganstahl ("Ferromangan"), Molybdänstahl ("Ferromolybdän"), Siliziumstahl ("Ferrosilizium"), V2A-Stahl oder ein Wolframstahl ("Ferrowolfram") zur Anwendung.

Als Kunststoffe haben sich bewährt Polyamid (PA), Plyaryletherketon (PAEK), Polyamidimid (PAI), Polyacrylnitril (PAN), Polybutylenterephtalat (PBT), Polycarbonat (PC), Polycyclohexylenimethylenterephatalat (PCT), Polyethylen (PE), Polyethylen, ultrahochmolekular (sehr hohe Molmasse, PE-UHMW),Polyetheretherketon (PEEK), Polyetherimid (PEI), Polyethylennaphthalat (PEN), Polyethersulfon (PES), Polyethylenterephthalat (PET), Polyimid (PI), Polymethacrylimid (PMI), Polymethylmethacrylat (PMMA), Polymethylpenten (PMP), Polyoxymethylen (POM), Polypropylen (PP), Polyphtalamid (PPA), Polyphenylenether (PPE), Polyphenylensulfid (PPS), Polypyrrol (PPY), Polysulfon (PSU), Polytetrafluorethylen (PTFE), Polyurethan (PU), Plyvinylalkohol (PVA), Polyvinylacetat (PVAC), Polyvinylchlorid (PVC), Cyclo-Olefin-Polymere (COP), Cyclo-Olefin-Copolymere (COC). Es versteht sich, dass die Kunststoffe auch mit einem Füllmaterial zu einem Kompositmaterial ergänzt sein können.

Es versteht sich, dass im Falle eines lichtdurchlässigen ersten Bereichs zumindest in diesem Bereich ein Material mit der entsprechenden Eigenschaft zu wählen ist. Selbiges gilt selbstverständlich im Falle einer gegenüber dem zweiten Bereich erhöhten Wärmeleitfähigkeit. Eine Form aus diesen Materialien ermöglicht eine massgenaue Herstellung des Zahnverblendungselements innerhalb der vorgegebenen Toleranzgrenzen bei guter Verschleissfestigkeit der Form.

Bevorzugt sind in der Form wenigstens zwei Formenteile vorhanden, welche in einem zusammengefügten Zustand den Hohlraum zur Formung des Zahnverblendungselements zumindest teilweise begrenzen, wobei der erste Bereich an einem ersten der Formenteile und der zweite Bereich an einem zweiten der Formenteile ausgebildet ist. Auf diese Weise können die beiden Bereiche mit unterschiedlichen Eigenschaften hinsichtlich Lichtdurchlässigkeit und Wärmeleitfähigkeit an unterschiedlichen Formenteilen ausgebildet sein. Insbesondere können z.B. am ersten Formenteil nur Bereich zur Formung der Aussenseite ausgebildet sein während am zweiten Formenteil nur Bereiche zur Formung der Innenseite vorhanden sind. Auf diese Weise kann die einfach hergestellt werden.

Bevorzugt sind genau zwei Formenteile vorhanden, wobei der erste Bereich zur Formung der im Wesentlichen gesamten Aussenseite des Zahnverblendungselements ausgebildet ist, und der zweite Bereich zur Formung der im Wesentlichen gesamten Innenseite ausgebildet ist. Dabei ist das erste Formenteil lichtdurchlässig ausgebildet und/oder weist die höhere Wärmeleitfähigkeit auf, als das zweite Formenteil. Es versteht sich, dass der erste Bereich in einem Übergangsbereich auch gewisse Abschnitte der Innenseite formen kann, während umgekehrt auch der zweite Bereich abschnittweise zur Formung der Aussenseite vorgesehen sein kann. Im Wesentlichen bezeichnet daher, dass der erste Bereich zu einem grösseren Anteil, bevorzugt vollständig, zur Formung der Aussenseite vorgesehen ist und der zweite Bereich zu einem grösseren Anteil, bevorzugt vollständig, zur Formung der Innenseite. Auf diese Weise kann der erste Formenteile gesamthaft lichtdurchlässig ausgebildet sein während der zweite Formenteil z.B. lichtundurchlässig ausgebildet ist. Ebenso kann der erste Formenteil gesamthaft aus einem Material mit einem höheren Wärmeleitfähigkeitskoeffizienten ausgebildet sein, als der zweite Formenteil.

Zur Lösung der Aufgabe führt weiterhin ein Verfahren zum Herstellen eines Zahnverblendungselements wie vorliegend beschrieben, wobei ein fliessfähiges, viskoses oder pastöses Kompositmaterial mit einem Anteil von umsetzbaren polymerisierbaren Gruppen in eine Form gemäss wie vorliegend beschrieben eingebracht und geformt wird und das Kompositmaterial im ersten Bereich der Form mit Licht bestrahlt und/oder mit Wärme beaufschlagt wird, sodass ein Umsatz der polymerisierbarer Gruppen des Kompositmaterials an einer dem ersten Bereich zugewandte Seite höher ist, als ein Umsatz auf einer dem zweiten Bereich der Form zugewandten Seite des Kompositmaterials. Somit wird auf einfache und vielseitige Weise mittels Lichteinstrahlung und/oder Wärmebeaufschlagung ein erfindungsgemässes Zahnverblendungselement wie vorliegend beschrieben erzeugt.

Die Bestrahlung mit Licht und/oder die Beaufschlagung mit Wärme wird beendet, solange ein Anteil noch nicht umgesetzter polymerisierbarer Gruppen des Kompositmaterials an der Innenseite grösser ist, als an der Aussenseite des Zahnverblendungselements. Die Dauer der Bestrahlung sowie die Intensität des Licht und/oder die Dauer und Intensität der Wärmebeaufschlagung hängt unter anderem z.B. von dem zur Anwendung kommenden Kompositmaterial, der Lichtdurchlässigkeit der Form im ersten Bereich und weiteren Faktoren ab. Diese können vom Fachmann jedoch ohne weiteres den Gegebenheiten entsprechend angepasst werden.

Mit Vorteil wird Licht in einem Wellenlängenbereich von 300 nm-500 nm eingestrahlt wird. Dieser Wellenlängenbereich kommt typischerweise bei Haftstoffen aus einem Kompositmaterial zur Anwendung. Auf diese Weise kann das Zahnverblendungselement aus einem analogen Material geformt werden, womit insbesondere bei der späteren Applikation des Zahnverblendungselements derselbe Wellenlängenbereich zur Härtung angewendet werden kann.

Die Erfindung betrifft weiter eine Verwendung einer Form wie vorliegend beschrieben zur Herstellung eines Zahnverblendungselements wie vorliegend beschrieben, insbesondere zur Durchführung eines Verfahrens wie vorliegend beschrieben.

Ebenso betrifft die Erfindung ein Kit umfassend wenigstens ein Zahnverblendungselement wie vorliegend beschrieben sowie einen Haftstoff, der befähigt ist, eine kovalente chemische Bindung mit den noch nicht umgesetzten polymerisierbaren Gruppen an der Innenseite des Zahnverblendungselements einzugehen.

Exemplarische Ausführungsformen der Erfindung sind nachfolgend anhand von Figuren näher erläutert. Hierbei zeigen schematisch:
- Fig. 1: eine frontale Aussenansicht eines Zahnverblendungselements;
- Fig. 2: eine Querschnittsansicht durch das Zahnverblendungselement der Fig. 1;
- Fig. 3a-3b:: Diagramme von möglichen Verläufen eines Verhältnisses von bereits umgesetzten polymerisierbaren Gruppen zu noch nicht umgesetzten polymerisierbaren Gruppen im Zahnverblendungselement
- Fig. 4a: eine Querschnittsansicht durch eine Form zur Herstellung eines erfindungsgemässen Zahnverblendungselements;
- Fig. 4b: eine Querschnittsansicht durch eine weitere Ausführungsform einer Form zur Herstellung eines erfindungsgemässen Zahnverblendungselements aus einem zumindest teilweise lichthärtbaren Kompositmaterial;
- Fig. 5: eine Querschnittsansicht durch eine weitere Ausführungsform einer Form zur Herstellung eines erfindungsgemässen Zahnverblendungselements aus einem zumindest teilweise thermisch härtbaren Kompositmaterial.

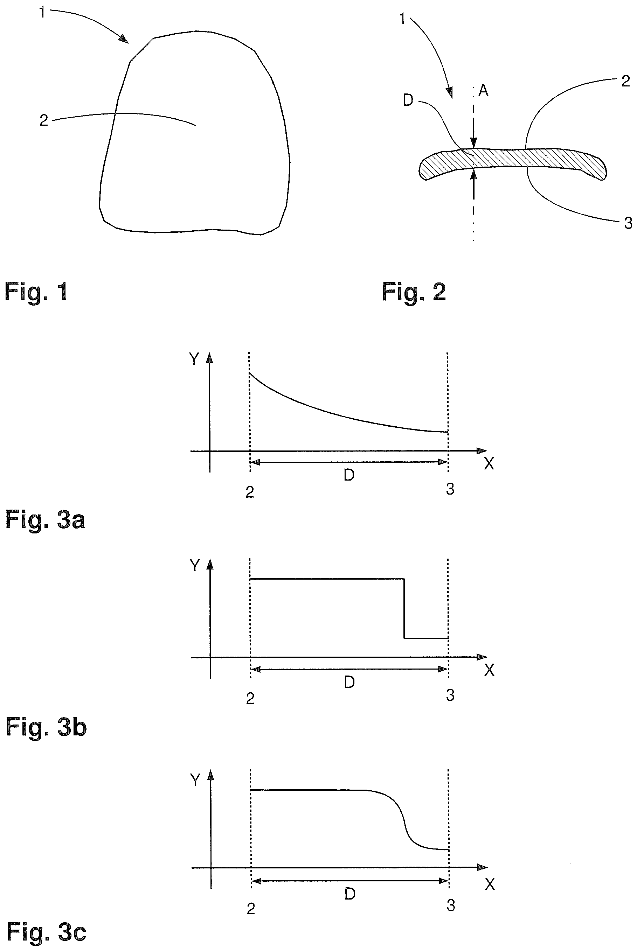

Figur 1 zeigt eine Frontalansicht eines Zahnverblendungselements 1 auf eine Aussenseite 2 des Zahnverblendungselements 1. Die Aussenseite 2 weist in einem auf einem Zahn befestigten Zustand vom Zahn weg und eine faziale Oberfläche des restaurierten Zahnes bildet. Das vorliegende Zahnverblendungselement 1 ist dabei für eine vollständige Verblendung der Zahnfrontfläche ausgebildet, kann aber selbstverständlich auch nur zur teilweisen Verblendung ausgebildet sein.

Figur 2 zeigt einen Querschnitt durch das Zahnverblendungselement 1 aus Figur 1. Die Aussenseite 2 und eine Innenseite 3 begrenzen das Zahnverblendungselement 1 in entgegen gesetzten Richtungen. Die Innenseite 3 ist zur Befestigung des Zahnverblendungselements 1 am Zahn oder an einem Zahnstumpf ausgebildet. Das Zahnverblendungselement 1 ist aus einem Kompositmaterial geformt, welches an der Aussenseite 2 einen geringeren Anteil von umgesetzten polymerisierbaren Gruppen aufweist, als an der Innenseite 3. Der Abstand von Aussenseite 2 zur Innenseite 3 ist mit einerDicke D des Zahnverblendungselements 1 bezeichnet. Die Dicke D kann dabei je nach Ort der Messung variieren. In Fig. 2 ist die Dicke D längs einer exemplarischen Schnittgeraden A eingezeichnet.

Figuren 3a bis 3c zeigen verschiedene Diagramme eines exemplarischen Verlaufs eines Verhältnisses von bereits umgesetzten polymerisierbaren Gruppen zu noch nicht umgesetzten polymerisierbaren Gruppen im Zahnverblendungselement 1. Der Verlauf ist dabei längs der Schnittgeraden A gemäss Fig. 2 von der Aussenseite 2 zur Innenseite 3 aufgezeigt. Auf der horizontalen Achse X ist eine Position längs A von der Aussenseite 2 zur Innenseite 3 aufgetragen während auf der vertikalen Achse Y das Verhältnis von bereits umgesetzten polymerisierbaren Gruppen zu noch nicht umgesetzten polymerisierbaren Gruppen aufgetragen ist. Der Anteil bereits umgesetzter polymerisierbarer Gruppen ist an der Aussenseite 2 jeweils höher, als an der Innenseite 3. Dabei kann der Anteil der bereits umgesetzten polymerisierbaren Gruppen erst in einer Grenzschicht an der Innseite 3 weitgehend abrupt (siehe Fig. 3b) oder in einem beschränkten Bereich kontinuierlich abnehmen (siehe Fig. 3a). Ebenso kann der Anteil kontinuierlich über die gesamte Dicke D durch das Zahnverblendungselement 1 hindurch abnehmen. Ein Verlauf längs A kann dabei unterschiedlich gestaltet und z.B. exponentiell oder linear verlaufen. Insbesondere ist es grundsätzlich auch denkbar, dass ein Verlauf zwischen Aussenseite 2 und Innenseite 3 auf einen Maximalwert steigt und erst dann zur Innenseite 3 hin auf einen kleineren Wert als an der Aussenseite 2 abfällt (nicht dargestellt) .

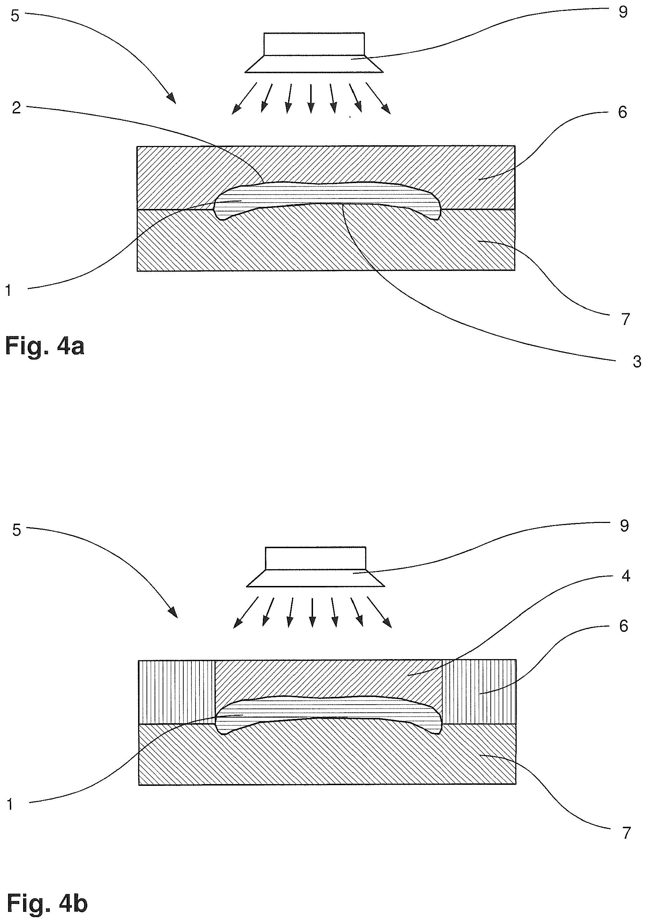

Figur 4a zeigt einen Schnitt durch eine Form 5, die eine erste Formenhälfte 6 und eine zweite Formenhälfte 7 umfasst. Die erste Formenhälfte 6 ist zur Formung der Aussenseite 2 des Zahnverblendungselements 1 ausgebildet. Vorliegend ist der gesamte Formbereich zur Formung der Aussenseite 2 an der Formenhälfte 6 ausgebildet. Die Formenhälfte 7 ist zur Formung der Innenseite des Zahnverblendungselements 1 ausgebildet, wobei der gesamte Formbereich zur Formung der Innenseite 3 an der Formenhälfte 7 ausgebildet. Die Formbereiche der Formhälften 6 und 7 bilden in zusammengefügten zustand der Formenhälften 6 und 7 einen Hohlraum ausgebildet, in den ein lichthärtendes Kompositmaterial zur Herstellung des Zahnverblendungselements 1 eingefüllt wird. Die erste Formenhälfte 6 ist vorliegend lichtdurchlässig ausgebildet, wobei bevorzugt die Formenhälfte 7 lichtundurchlässig ausgebildet ist.

Nach dem Formen des Zahnverblendungselements 1 im Hohlraum wird das Kompositmaterial durch die erste Formhälfte 6 hindurch von einer Lichtquelle 9 mit Licht mit einer Wellenlänge von bevorzugt 300 nm bis 500 nm bestrahlt. Das Kompositmaterial wird auf diese Weise an der Aussenseite 2, wo die grösste Intensität eingestrahlten Lichts besteht, effektiver gehärtet, als an der Innenseite 3. Mit anderen Worten werden die polymerisierbaren Gruppen an der Aussenseite 2 stärker bzw. schneller umgesetzt, als an der Innenseite 3. Dauer und Art der Belichtung sind dabei derart gewählt, dass bei Beendigung des Härtvorgangs an der Innenseite 3 ein Anteil noch nicht umgesetzter polymerisierbarer Gruppen höher ist, als an der Aussenseite 2. Mit anderen Worten ist das Zahnverblendungselement 1 nach Beendigung des Härtvorgangs nicht vollständig durchgehärtet. Bevorzugt wird dabei aber die Aussenseite 2 weitgehend vollständig ausgehärtet. Daraufhin kann das Zahnverblendungselement 1 aus der Form 5 entnommen werden, wobei der Verlauf des Anteils noch nicht umgesetzter polymerisierbarer Gruppen im Zahnverblendungselement 1 bestehen bleibt.

Aufgrund des Anteils noch nicht umgesetzter polymerisierbarer Gruppen kann ein Haftstoff mit dem Material des Zahnverblendungselements 1 an der Innenseite 3 kovalente Bindungen eingehen, sodass das Zahnverblendungselement 1 beim endgültigen Aushärten optimal mit dem Haftstoff auf einem Zahn befestigt werden kann.

Figur 4b zeigt eine weitgehend analoge Ausführungsform der Form 5, wie in Fig. 4a gezeigt, wobei jedoch in einen Grundkörper des ersten Formenteils 6 ein Fenster 4 eingesetzt ist. Der Grundkörper selbst braucht keine speziellen Eigenschaften zu haben, insbesondere nicht lichtdurchlässig zu sein. Am Fenster 4 ist der Formenbereich des Formenteils 6 ausgebildet. Das Fenster 4 reicht durch den Formenteil 6 bis nach aussen, sodass Licht von der Lichtquelle 9 eingestrahlt werden kann.

Selbstverständlich kann die Lichtquelle 9 in anderen Ausführungsformen auch in das Formenteil 6 integriert sein, wobei in diesem Fall das Fenster 4 nicht bis nach aussen reichen muss. Grundsätzlich sind auch weitere Ausführungsformen denkbar, bei welchen das Licht über einen oder mehrere Lichtleiter in den gefüllten Hohlraum eingebracht wird. Beispielsweise kann grundsätzlich die Oberfläche im Formbereich selbst derart ausgebildet sein, dass das Licht direkt an der Oberfläche abgegeben wird bzw. allenfalls sogar selbst leuchtend ausgebildet sein.

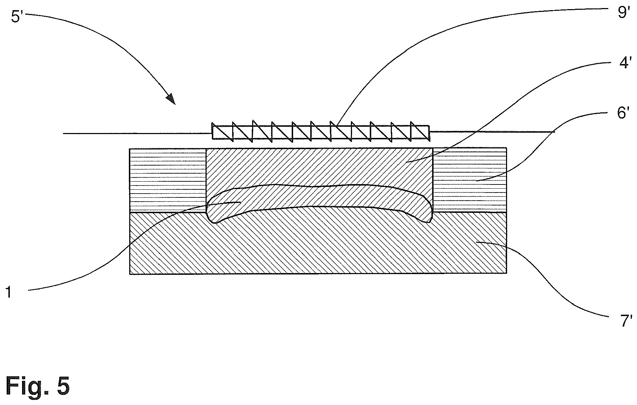

Figur 5 zeigt eine weitere Ausführungsform der Form 5', bei welcher ein Formenteil 6' eine höhere Wärmeleitfähigkeit als das Formenteil 7' aufweist. Hierzu ist der Formbereich des Formenteils 6' an einem Einsatz 4' mit erhöhter Wärmeleitfähigkeit als das übrige Material der Form 5' ausgebildet. Eine Heizvorrichtung 9', welche Teil einer Formanlage oder ein integraler Teil der Form 5' sein kann, wirkt auf den Einsatz 4'. Die Form 5' ist zur Anwendung mit einem wenigstens teilweise thermisch härtbaren Kompositmaterial vorgesehen.

Aufgrund der erhöhten Wärmeleitfähigkeit kann vom ersten Formteil 6' her über den Einsatz 4' in kürzerer Zeit mehr Wärmeenergie in das Kompositmaterial eingebracht werden. Auf diese Weise wird das Kompositmaterial an der Aussenseite 2 des Zahnverblendungselements 1, wo die Wärmeenergie vornehmlich eingebracht wird, am schnellsten gehärtet.

## Patentansprüche

1. Zahnverblendungselement (1) zum Verblenden einer Zahnoberfläche, umfassend ein Kompositmaterial mit zumindest teilweise umgesetzten polymerisierbaren Gruppen, wobei das Zahnverblendungselement (1) eine Aussenseite (2) und eine Innenseite (3) aufweist, wobei die Innenseite (3) des Zahnverblendungselements (1) zur Befestigung an einem Zahn vorgesehen ist, wobei ein Anteil noch nicht umgesetzter polymerisierbarer Gruppen des Kompositmaterials an der Innenseite (3) grösser ist als an der Aussenseite (2) des Zahnverblendungselements (1), **dadurch gekennzeichnet, dass** der Anteil von noch nicht umgesetzten polymerisierbaren Gruppen von der Aussenseite (2) zur Innenseite (3) bereichsweise kontinuierlich zunimmt.

2. Zahnverblendungselement (1) nach Anspruch 1, **dadurch gekennzeichnet, dass** der Anteil von noch nicht umgesetzten polymerisierbaren Gruppen von der Aussenseite (2) zur Innenseite (3) bereichsweise in einer Grenzschicht an der Innenseite kontinuierlich zunimmt.

3. Zahnverblendungselement (1) nach einem Ansprüche 1 oder 2, **dadurch gekennzeichnet, dass** die Dicke (4) des Zahnverblendungselements (1) im Bereich von 0.2 mm bis 1.6 mm, insbesondere im Bereich von 0.3 mm bis 1.2 mm, liegt.

4. Zahnverblendungselement (1) nach einem der Ansprüche 1 bis 3, **dadurch gekennzeichnet, dass** das Kompositmaterial eine Acrylatbasis, insbesondere eine Methacrylatbasis, umfasst.

5. Zahnverblendungselement (1) nach einem der Ansprüche 1 bis 4, **dadurch gekennzeichnet, dass** das Kompositmaterial lichthärtend und/oder thermisch härtend ausgebildet ist.

6. Zahnverblendungselement (1) nach einem der Ansprüche 1 bis 5, **dadurch gekennzeichnet, dass** der Anteil noch nicht umgesetzter polymerisierbarer Gruppen an der Innenseite in einem Bereich von 10% bis 80%, insbesondere 25% bis 70% liegt.

7. Zahnverblendungselement (1) nach einem der Ansprüche 1 bis 6, **dadurch gekennzeichnet, dass** der Anteil noch nicht umgesetzter polymerisierbarer Gruppen an der Aussenseite in einem Bereich von 1% bis 50%, insbesondere im Bereich von 5% bis 35% liegt.

8. Verfahren zum Herstellen eines Zahnverblendungselements (1) zum Verblenden einer Zahnoberfläche nach Anspruch 1, umfassend ein Kompositmaterial mit zumindest teilweise umgesetzten polymerisierbaren Gruppen, wobei das Zahnverblendungselement (1) eine Aussenseite (2) und eine Innenseite (3) aufweist, wobei die Innenseite (3) des Zahnverblendungselements (1) zur Befestigung an einem Zahn vorgesehen ist, wobei ein Anteil noch nicht umgesetzter polymerisierbarer Gruppen des Kompositmaterials an der Innenseite (3) grösser ist, als an der Aussenseite (2) des Zahnverblendungselements (1), wobei ein fliessfähiges, viskoses oder pastöses Kompositmaterial mit einem Anteil von umsetzbaren polymerisierbaren Gruppen in eine Form (5) eingebracht und geformt wird,
- wobei die Form einen Hohlraum zur Formung des Zahnverblendungselements aufweist und die Form einen ersten Bereich, welcher zur zumindest teilweisen Formung der Aussenseite des Zahnverblendungselements vorgesehen ist und einen zweiten Bereich, welcher zur Formung der Innenseite vorgesehen ist aufweist, und wobei die Form in einem im ersten Bereich, welcher zur zumindest teilweisen Formung der Aussenseite des Zahnverblendungselements vorgesehen ist, insbesondere im Wellenlängenbereich von 300 nm - 500 nm, lichtdurchlässig ausgebildet ist, und/oder in dem im ersten Bereich eine höhere Wärmeleitfähigkeit aufweist, als in einem im zweiten Bereich, welcher zur Formung der Innenseite vorgesehen ist,
und das Kompositmaterial im ersten Bereich der Form mit Licht bestrahlt und/oder mit Wärme beaufschlagt wird, sodass ein Umsatz der polymerisierbarer Gruppen des Kompositmaterials an einer dem ersten Bereich zugewandte Seite höher ist, als ein Umsatz auf einer dem zweiten Bereich der Form zugewandten Seite des Kompositmaterials und der Anteil von noch nicht umgesetzten polymerisierbaren Gruppen von der Aussenseite (2) zur Innenseite(3) bereichsweise kontinuierlich zunimmt.

9. Verfahren gemäss Anspruch 8, **dadurch gekennzeichnet, dass** die Bestrahlung mit Licht und/oder die Beaufschlagung mit Wärme beendet wird, solange ein Anteil noch nicht umgesetzter polymerisierbarer Gruppen des Kompositmaterials an der Innenseite (3) grösser ist, als an der Aussenseite (2) des Zahnverblendungselements (1).

10. Verfahren gemäss einem der Ansprüche 8 oder 9, **dadurch gekennzeichnet, dass** Licht in einem Wellenlängenbereich von 300 nm-500 nm eingestrahlt wird.

11. Kit umfassend wenigstens ein Zahnverblendungselement (1) gemäss den Ansprüchen 1 bis 7 sowie einen Haftstoff, der befähigt ist, eine kovalente chemische Bindung mit den noch nicht umgesetzten polymerisierbaren Gruppen der Innenseite des Zahnverblendungselements (1) einzugehen.

## Claims

1. Tooth veneer element (1) for veneering a tooth surface, comprising a composite material with at least partially converted polymerizable groups, wherein the tooth veneer element (1) has an outer face (2) and an inner face (3), wherein the inner face (3) of the tooth veneer element (1) is provided for securing on a tooth, wherein a fraction of as yet unconverted polymerizable groups of the composite material is greater on the inner face (3) than on the outer face (2) of the tooth veneer element (1), **characterized in that** the fraction of as yet unconverted polymerizable groups increases continuously from the outer face (2) to the inner face (3) in certain regions.

2. Tooth veneer element (1) according to Claim 1, **characterized in that** the fraction of as yet unconverted polymerizable groups increases continuously from the outer face (2) to the inner face (3) in certain regions in a boundary layer on the inner face.

3. Tooth veneer element (1) according to either of Claims 1 and 2, **characterized in that** the thickness (4) of the tooth veneer element (1) is in the range of from 0.2 mm to 1.6 mm, in particular in the range of from 0.3 mm to 1.2 mm.

4. Tooth veneer element (1) according to one of Claims 1 to 3, **characterized in that** the composite material comprises an acrylate base, in particular a methacrylate base.

5. Tooth veneer element (1) according to one of Claims 1 to 4, **characterized in that** the composite material is light-curable and/or heat-curable.

6. Tooth veneer element (1) according to one of Claims 1 to 5, **characterized in that** the fraction of as yet unconverted polymerizable groups on the inner face is in a range of from 10% to 80%, in particular 25% to 70%.

7. Tooth veneer element (1) according to one of Claims 1 to 6, **characterized in that** the fraction of as yet unconverted polymerizable groups on the outer face is in a range of from 1% to 50%, in particular in the range of from 5% to 35%.

8. Method for producing a tooth veneer element (1) for veneering a tooth surface according to Claim 1, comprising a composite material with at least partially converted polymerizable groups, wherein the tooth veneer element (1) has an outer face (2) and an inner face (3), wherein the inner face (3) of the tooth veneer element (1) is provided for securing on a tooth, wherein a fraction of as yet unconverted polymerizable groups of the composite material is greater on the inner face (3) than on the outer face (2) of the tooth veneer element (1), wherein a free-flowing, viscous or pasty composite material with a fraction of convertible polymerizable groups is introduced into a mould (5) and moulded,
- wherein the mould has a cavity for moulding the tooth veneer element, and the mould has a first region, which is provided for at least partially moulding the outer face of the tooth veneer element, and a second region, which is provided for moulding the inner face, and wherein the mould, in a in the first region provided for at least partially moulding the outer face of the tooth veneer element, is configured to be transparent, in particular in the wavelength range of 300 nm - 500 nm, and/or has a greater thermal conductivity in the in the first region than in a in the second region, which is provided for moulding the inner face,
and the composite material in the first region of the mould is irradiated with light and/or exposed to heat, such that a conversion of the polymerizable groups of the composite material is greater on a side facing the first region than a conversion on a side of the composite material facing the second region of the mould, and the fraction of as yet unconverted polymerizable groups increases continuously from the outer face (2) to the inner face (3) in certain regions.

9. Method according to Claim 8, **characterized in that** the irradiation with light and/or the exposure to heat are/is terminated as long as a fraction of as yet unconverted polymerizable groups of the composite material is greater on the inner face (3) than on the outer face (2) of the tooth veneer element (1).

10. Method according to either of Claims 8 and 9, **characterized in that** light in a wavelength range of 300 nm - 500 nm is irradiated.

11. Kit comprising at least one tooth veneer element (1) according to Claims 1 to 7 and an adhesive that is able to form a covalent chemical bond with the as yet unconverted polymerizable groups of the inner face of the tooth veneer element (1).

## Revendications

1. Élément de facette dentaire (1) pour recouvrir une surface dentaire d'une facette, comprenant un matériau composite présentant des groupes polymérisables au moins partiellement transformés, l'élément de facette dentaire (1) présentant un côté externe (2) et un côté interne (3), le côté interne (3) de l'élément de facette dentaire (1) étant destiné à être fixé à une dent, une proportion de groupes polymérisables non encore transformés du matériau composite sur le côté interne (3) étant supérieure à celle sur le côté externe (2) de l'élément de facette dentaire (1), **caractérisé en ce que** la proportion de groupes polymérisables non encore transformés augmente en continu, par zones, du côté externe (2) vers le côté interne (3).

2. Élément de facette dentaire (1) selon la revendication 1, **caractérisé en ce que** la proportion de groupes polymérisables non encore transformés augmente en continu, par zones, du côté externe (2) vers le côté interne (3) dans une couche limite sur le côté interne.

3. Élément de facette dentaire (1) selon la revendication 1 ou 2, **caractérisé en ce que** l'épaisseur (4) de l'élément de facette dentaire (1) se situe dans la plage de 0,2 mm à 1,6 mm, en particulier dans la plage de 0,3 mm à 1,2 mm.

4. Élément de facette dentaire (1) selon l'une quelconque des revendications 1 à 3, **caractérisé en ce que** le matériau composite comprend une base d'acrylate, en particulier une base de méthacrylate.

5. Élément de facette dentaire (1) selon l'une quelconque des revendications 1 à 4, **caractérisé en ce que** le matériau composite est conçu de manière durcissable à la lumière et/ou thermiquement durcissable.

6. Élément de facette dentaire (1) selon l'une quelconque des revendications 1 à 5, **caractérisé en ce que** la proportion de groupes polymérisables non encore transformés sur le côté interne se situe dans une plage de 10% à 80%, en particulier de 25% à 70%.

7. Élément de facette dentaire (1) selon l'une quelconque des revendications 1 à 6, **caractérisé en ce que** la proportion de groupes polymérisables non encore transformés sur le côté externe se situe dans une plage de 1% à 50%, en particulier dans la plage de 5% à 35%.

8. Procédé pour la fabrication d'un élément de facette dentaire (1) pour recouvrir une surface dentaire par une facette selon la revendication 1, comprenant un matériau composite présentant des groupes polymérisables au moins partiellement transformés, l'élément de facette dentaire (1) présentant un côté externe (2) et un côté interne (3), le côté interne (3) de l'élément de facette dentaire (1) étant destiné à être fixé à une dent, une proportion de groupes polymérisables non encore transformés du matériau composite sur le côté interne (3) étant supérieure à celle sur le côté externe (2) de l'élément de facette dentaire (1), un matériau composite pouvant s'écouler, visqueux ou pâteux présentant une proportion de groupes polymérisables transformables étant introduit et façonné dans un moule (5)
- le moule présentant une cavité pour façonner l'élément de facette dentaire et le moule présentant une première zone, qui est destinée au façonnage au moins partiel du côté externe de l'élément de facette dentaire, et une deuxième zone, qui est destinée au façonnage du côté interne, et le moule étant conçu de manière transparente à la lumière, en particulier dans une zone de longueurs d'onde de 300 nm-500 nm, dans une dans la première zone, qui est destinée au façonnage au moins partiel du côté externe de l'élément de facette dentaire, et/ou présentant, dans la dans la première zone, une conductibilité thermique supérieure à celle dans la dans la deuxième zone qui est destinée au façonnage du côté interne,
et le matériau composite étant irradié et/ou soumis à de la chaleur dans la première zone du moule, de telle sorte qu'une conversion des groupes polymérisables du matériau composite sur un côté orienté vers la première zone est supérieure à une conversion sur un côté du matériau composite orienté vers la deuxième zone du moule et la proportion de groupes polymérisables non encore transformés augmentant par zones du côté externe (2) vers le côté interne (3).

9. Procédé selon la revendication 8, **caractérisé en ce que** l'irradiation par la lumière et/ou la soumission à la chaleur est/sont terminée(s) tant qu'une proportion de groupes polymérisables non encore transformés du matériau composite sur le côté interne (3) est supérieure à celle sur le côté externe (2) de l'élément de facette dentaire (1).

10. Procédé selon l'une quelconque des revendications 8 ou 9, **caractérisé en ce qu'**on irradie de la lumière d'une zone de longueurs d'onde de 300 nm-500 nm.

11. Kit comprenant au moins un élément de facette dentaire (1) selon les revendications 1 à 7 ainsi qu'un adhésif, qui est en mesure de former une liaison chimique covalente avec les groupes polymérisables non encore transformés du côté interne de l'élément de facette dentaire (1).
